(19) Europäisches Patentamt
European Patent Office
Office européen des brevets

(11) **EP 1 323 774 B1**

(12) **EUROPEAN PATENT SPECIFICATION**

(45) Date of publication and mention
of the grant of the patent:
**05.10.2005 Bulletin 2005/40**

(51) Int Cl.⁷: **C08L 7/00**, C08L 9/00,
C08K 3/00, C08K 3/08,
C08K 3/34, C08K 3/36,
B60C 1/00

(21) Application number: **02028344.6**

(22) Date of filing: **17.12.2002**

(54) **Rubber composition and tire using the same**

Gummizusammensetzung und ihre Verwendung für Reifen

Composition de coutchouc et pneu contenant de cette composition

(84) Designated Contracting States:
**DE FR GB**

(30) Priority: **19.12.2001 JP 2001386072**

(43) Date of publication of application:
**02.07.2003 Bulletin 2003/27**

(73) Proprietor: **SUMITOMO RUBBER INDUSTRIES LIMITED**
**Hyogo-ken (JP)**

(72) Inventor: **Hochi, Kazuo**
**Chuo-ku, Kobe-shi, Hyogo-ken (JP)**

(74) Representative:
**Manitz, Finsterwald & Partner GbR**
**Postfach 31 02 20**
**80102 München (DE)**

(56) References cited:
**EP-A- 0 928 810          WO-A-00/73372**
**US-A- 5 069 816          US-A- 5 821 290**

• **PATENT ABSTRACTS OF JAPAN vol. 2000, no. 19, 5 June 2001 (2001-06-05) -& JP 2001 040143 A (SUMITOMO RUBBER IND LTD), 13 February 2001 (2001-02-13)**
• **PATENT ABSTRACTS OF JAPAN vol. 2000, no. 14, 5 March 2001 (2001-03-05) -& JP 2000 319447 A (SUMITOMO RUBBER IND LTD), 21 November 2000 (2000-11-21)**

**Description**

The present invention relates to a rubber composition and tire made from this rubber composition. More specifically, it concerns a rubber composition for a tire tread, with superior balance in tire processability, rolling resistance, and wet skid performance, and a tire with a tread made from this rubber composition.

In recent years, global consciousness regarding resource and energy conservation has risen, and in the automobile industry, research is actively being conducted on a low fuel consumption tire with reduced rolling resistance in order to economize fuel consumption. One effective method of reducing the rolling resistance of a tire is the method of replacing some or all of the carbon black which has conventionally been used as a reinforcing agent, with silica. However, as demands toward tires rise, corresponding simply by the method of using silica is no longer satisfactory, and there is a need for further improvement in performance.

Besides low fuel consumption, a wide range of properties is requested in an automobile tire, such as wet skid performance, abrasion resistance, and processability, and various ingenious attempts are being made.

For example, for the purpose of improving wet skid performance, there is a prior art of compounding metal silicicate with the rubber composition (JP-A-2001-40143). However, this stops short of fulfilling various other functions such as abrasion resistance, rolling resistance and processability.

The object of the present invention is to provide a rubber composition with superior balance in processability, rolling resistance, and wet skid performance, and a tire made from this rubber composition.

The present invention relates to a rubber composition comprising at least one rubber selected from the group consisting of diene rubbers and natural rubber, and per 100 parts by weight of said rubber, 30 to 120 parts by weight of silica, and 5 to 40 parts by weight of zirconium silicate having an average particle diameter of at most 10 $\mu$m.

The invention also concerns a tire with a tread made from the aforesaid rubber composition.

The present invention is explained in detail below.

The rubber composition of the present invention comprises a rubber component, silica, and zirconium silicate.

The aforesaid rubber component is diene rubber and/or a natural rubber. Examples of diene rubber are for example, styrenebutadiene rubber, butadiene rubber, isoprene rubber and the like, and mixtures of these may also be used.

Though there are no limitations as to the silica, dry process silica (silicic anhydride), wet process silica (silicic hydrate) and the like may be used. Of these, wet process silica is preferred. Preferable examples of wet process silica are Ultrasil VN3 (product name) available from Degussa Co., Nipsil VN3 AQ (product name) available from Nippon Silica Industrial Co., Ltd.

As the silica, for example, silica with a nitrogen adsorption specific surface area ($N_2SA$) of 50 to 300 $m^2$/g can be used in the composition. When the $N_2SA$ of silica is less than 50 $m^2$/g, the dispersion modifying and reinforcing effects tend to diminish, and when the $N_2SA$ of silica exceeds 300 $m^2$/g, dispersion becomes poor and the heat build-up tends to increase.

The amount of silica to be compounded is 30 to 120 parts by weight, more preferably 40 to 90 parts by weight, most preferably 45 to 80 parts by weight, based on 100 parts by weight of the rubber component. When the amount of silica is less than 30 parts by weight, wet skid performance and reinforcing property diminish, and when the amount of silica is greater than 120 parts by weight, viscosity becomes high when kneading, and workability decreases.

It is preferable that the zirconium silicate is fine powder and the average particle diameter is at most 10 $\mu$m, preferably at most 2 $\mu$m. When the average particle diameter of zirconium silicate is greater than 10 $\mu$m, abrasion resistance and cut chipping performance diminish.

The amount of zirconium silicate to be compounded is 5 to 40 parts by weight, preferably 8 to 30 parts by weight, more preferably 10 to 20 parts by weight, based on 100 parts by weight of the rubber component. When the amount of zirconium silicate is less than 5 parts by weight, sufficient effects cannot be attained, and when the amount of zirconium silicate is greater than 40 parts by weight, abrasion resistance decreases.

In the present invention, by using silica and zirconium silicate together, in comparison to using them alone, the effect of improved balance between abrasion resistance, rolling resistance and wet skid performance can be attained.

In the rubber composition of the present invention, a silane coupling agent may also be compounded in joint use with silica.

Examples of silane coupling agents include bis(triethoxysilylpropyl)tetrasulfide, bis(triethoxysilylpropyl)disulfide, triethoxysilylpropylisocyanate, vinyltriethoxysilane, vinyltrimethoxysilane, $\gamma$-methacryloxypropyltrimethoxysilane, $\gamma$-methacyloxypropylmethyldimethoxysilane, $\gamma$-glycidoxypropylmethyldiethoxysilane, $\gamma$-mercaptopropyltrimethoxysilane, $\gamma$-(polyethylene amino)-propyltrimethoxysilane, N-$\beta$-(aminoethyl)-$\gamma$-aminopropyltrimethoxysilane, N'-vinylbenzyl-N-trimethoxysilylpropylethylene diamine salt and the like. Among them, bis(triethoxysilylpropyl)tetrasulfide, bis(triethoxysilylpropyl)disulfide, triethoxysilylpropylisocyanate and $\gamma$-mercaptopropyltrimethoxysilane are preferable. And bis(triethoxysilylpropyl)disulfide is more preferable.

The amount of the silane coupling agent to be compounded is preferably 4 to 14 % by weight, more preferably 6 to 10 % by weight, based on the amount of silica. When the amount of the silane coupling agent is less than 4 % by weight, abrasion resistance and wet skid performance tend to decrease, and when the amount of the silane coupling agent is greater than 14 % by weight, the improvement of physical properties is small despite an increase in costs.

Furthermore, aside from the rubber component, silica, zirconium silicate and silane coupling agent, a compounding agent which is generally used in the rubber composition, such as carbon black, process oil, zinc oxide, wax, antioxidant, vulcanizing agent, or vulcanization accelerator may be compounded accordingly to the rubber composition of the present invention.

The rubber composition of the present invention is obtained by mixing the rubber component, silica, zirconium silicate, and any other compounding agents, as the need arises, by using the usual processing machine, such as a roll, Banbury mixer, kneader and the like.

The tire of the present invention is prepared by using the aforesaid rubber composition as a tire tread, according to the conventional method. Specifically, the rubber composition, when still unvulcanized, is processed by extrusion into the form of the tire tread, each tire part being laminated together on the tire making machine in the conventional method, to form an unvulcanized tire. A tire is then obtained by heating and pressurizing these unvulcanized tires in the vulcanizer. The tire obtained in this way has an excellent balance of processability, rolling resistance, and wet skid performance.

EXAMPLES

The present invention is explained in detail based on Examples below, but not limited thereto. In Examples and Comparative Examples, the following materials are used.

Natural rubber: RSS #3

S-SBR: Nipol NS116R available from Zeon Corporation. (amount of styrene unit: 20 % by weight, amount of 1,2-diene unit: 60 % by weight)

Silica: Zeosil 1165MP available from Rhoia Co., Ltd.

Zirconium silicate: Micropacks SS available from Hakusui Tech Co., Ltd. (average particle size: 2 $\mu$m or less in 100 %)

Silane coupling agent: Si69 available from Degussa Co.

Process oil: Diana Process AH 40 available from Idemitsu Kosan Co., Ltd.

Zinc oxide: Zinc Oxide No. 2 available from Mitsui Mining and Smelting Co., Ltd.

Wax: SUN NOC wax available from Ohuchi Shinko Kagaku Kogyo Co., Ltd.

Stearic acid: KIRI available from NOF Corporation

Antioxidant: Santoflex 13 ((N-1,3-dimethylbutyl)-N'-phenyl-p-phenylenediamine) available from FLEXSYS CO.

Sulfur: sulfur available from Karuizawa Seirensho Kabushiki Kaisha.

Vulcanization accelerator CBS: Nocceler CZ-G (N-cyclohexyl-2-benzothiazolylsulfenamide) available from Ohuchi Shinko Kagaku Kogyo Co. Ltd.

Vulcanization accelerator DPG: Soxinol D (diphenyl guanidine) available from Sumitomo Chemical Co., Ltd.

EXAMPLES 1 to 2 and COMPARATIVE EXAMPLES 1 to 3

Processing method

The raw material rubber and materials to be compounded except for sulfur and vulcanization accelerator were mixed by using a Banbury internal mixer, based on the compounding recipe shown in Tables 1 and 2. Sulfur and vulcanization accelerator were then added to the obtained masterbatch on an open roll to prepare the rubber composition for the tire tread. Subsequently, the respective rubber compositions of Examples 1-2 and Comparative Examples 1-3 were used as the tread of pneumatic tires, and the following property evaluations were carried out.

(Rolling resistance)

The rolling resistance was measured according to the usual method under the conditions of a load of 4.66 kN, an inner pressure of 200 kPa and a speed of 80 km/hour. The rolling resistance was represented as an index to the value of Comparative Example 1 as 100 according to the following equation (rolling resistance index). The larger the index, the smaller the rolling resistance is and the better the property is.

(rolling resistance index) = (rolling resistance value of

Comparative Example 1) ÷ (rolling resistance value of Example or

Comparative Example) × 100

(Wet skid performance)

The braking distance from the initial running speed of 64 km/h was measured on a wet asphalt road. In the test, a Japanese front engine/front wheel drive automobile with a tire size of 185/65R14 was used. The wet skid performance was represented as an index to the value of Comparative Example 1 as 100 according to the following equation (wet skid index). The larger the index, the more excellent the wet skid performance is.

(wet skid index) = (braking distance value of Comparative

Example 1) ÷ (braking distance value of Example or Comparative

Example) × 100

(Abrasion resistance)

A tire with the obtained tread was installed on a Japanese front engine/front wheel drive automobile. After the automobile was run for 15,000 km on a paved road, the driven distance at which the tire tread is worn out by 1 mm was compared, and the value was represented as an index to the value of Comparative Example 1 as 100 according to the following equation (abrasion resistance index). The larger the index, the more excellent the abrasion resistance is.

(abrasion resistance index) = ( value of distance driven in

Example or Comparative Example) ÷ (value of distance driven in

Comparative Example 1) × 100

The results are shown in Table 2.
In comparison to Comparative Example 1, in which zirconium silicate was not compounded into the silica compounded rubber composition, and Comparative Example 2, in which a small amount of zirconium silicate was compounded, the balance between abrasion resistance, processability, wet skid performance and rolling resistance was improved in Examples 1-2, in which the appropriate amount of zirconium silicate was compounded.
On the other hand, in Comparative Example 3, in which a great deal of zirconium silicate was compounded, although rolling resistance and wet skid performance increased, abrasion resistance and processability diminished considerably.

TABLE 1

| Materials | Part by weight |
|---|---|
| Natural rubber | 30 |
| S-SBR | 70 |
| Silica | Variable |
| Zirconium Silicate | Variable |
| Silane coupling agent | 6.4 |
| Process oil | 22 |
| Zinc oxide | 2.5 |
| Wax | 1 |
| Stearic acid | 2 |
| Antioxidant | 1.5 |
| Sulfur | 1.5 |
| Vulcanization accelerator CBS | 1.5 |

TABLE 1   (continued)

| Materials | Part by weight |
|---|---|
| Vulcanization accelerator DPG | 1 |

TABLE 2

| | Ex. | | Com. Ex. | | |
|---|---|---|---|---|---|
| | 1 | 2 | 1 | 2 | 3 |
| Silica | 75 | 70 | 80 | 80 | 60 |
| Zirconium Silicate | 10 | 20 | - | 3 | 45 |
| Rolling resistance | 102 | 105 | 100 | 100 | 115 |
| Wet skid performance | 101 | 103 | 100 | 100 | 105 |
| Abrasion resistance | 102 | 98 | 100 | 100 | 84 |

According to the present invention, by compounding a specific amount of silica and zirconium silicate to the rubber composition, the balance between tire processability, abrasion resistance, rolling resistance, and wet skid performance can be improved compared to prior technology.

**Claims**

1.  A tire tread comprising a rubber composition which comprises at least one rubber selected from the group consisting of diene rubbers and natural rubber, and per 100 parts by weight of said rubber, 30 to 120 parts by weight of silica, and 5 to 40 parts by weight of zirconium silicate having an average particle diameter of at most 10 $\mu$m.

2.  A tire with the tread of Claim 1.

**Patentansprüche**

1.  Reifenlauffläche, umfassend eine Gummizusammensetzung, welche wenigstens einen Gummi, ausgewählt aus der aus Diengummis und Naturgummi bestehenden Gruppe, und pro 100 Gew.-Teile dieses Gummis 30 bis 120 Gew.-Teile Siliziumdioxid und 5 bis 40 Gew.-Teile Zirkoniumsilikat, das einen Durchschnittsteilchendurchmesser von höchstens 10 $\mu$m hat, umfaßt.

2.  Reifen mit der Lauffläche von Anspruch 1.

**Revendications**

1.  Bande de roulement comprenant une composition de caoutchouc qui comprend au moins un caoutchouc choisi dans le groupe constitué par les caoutchoucs diéniques et le caoutchouc naturel et, pour 100 parties en poids dudit caoutchouc, 30 à 120 parties en poids de silice, et 5 à 40 parties en poids de silicate de zirconium ayant un diamètre de particules moyen d'au plus 10 $\mu$m.

2.  Pneu avec la bande de roulement selon la revendication 1.